Europäisches Patentamt

European Patent Office

Office européen des brevets

(11) Publication number: **0 550 228 B1**

(12) EUROPEAN PATENT SPECIFICATION

(45) Date of publication of patent specification: **26.07.95** (51) Int. Cl.⁶: **F04B 27/08**, F04B 27/12, F16H 23/02

(21) Application number: **92311608.1**

(22) Date of filing: **18.12.92**

(54) Swash plate type compressor with variable displacemnet mechanism.

(30) Priority: **18.12.91 JP 335076/91**

(43) Date of publication of application:
**07.07.93 Bulletin 93/27**

(45) Publication of the grant of the patent:
**26.07.95 Bulletin 95/30**

(84) Designated Contracting States:
**DE FR GB IT SE**

(56) References cited:
**FR-A- 2 461 813**
**US-A- 2 889 781**

(73) Proprietor: **SANDEN CORPORATION**
**20 Kotobuki-cho**
**Isesaki-shi**
**Gunma, 372 (JP)**

(72) Inventor: **Terauchi, Kiyoshi**
**c/o Sanden Corporation,**
**20 Kotobuki-cho**
**Isesaki-shi,**
**Gunma 372 (JP)**

(74) Representative: **Jackson, Peter Arthur**
**GILL JENNINGS & EVERY**
**Broadgate House**
**7 Eldon Street**
**London EC2M 7LH (GB)**

## Description

The present invention relates to a variable displacement swash plate type compressor which is particularly available as a refrigerant compressor for an automotive air-conditioning apparatus.

A swash plate type refrigerant compressor with a variable displacement mechanism suitable for use in an automotive air conditioning system is disclosed in U.S. Patent No.4963074. As disclosed there, a swash plate is provided on a rotary shaft of the compressor so that a change in inclination angle of the slant plate causes the reciprocating stroke of each piston to change.

A swash plate is connected with rotor plate through a hinge coupling mechanism for rotation in unison with rotor plate. The incline angle of a swash plate is adjustable to vary the stroke length of the double-headed piston.

The hinge coupling mechanism includes an arm portion projecting axially from a swash plate toward an arm portion of a rotor plate from one side surface thereof. The arm portions overlap each other and are connected to one another by a guide pin which extends into a rectangular shaped hole formed through the arm portion of the rotor plate and a pin hole formed through the arm portion of slant plate. That is, this compressor includes only one hinge coupling mechanism.

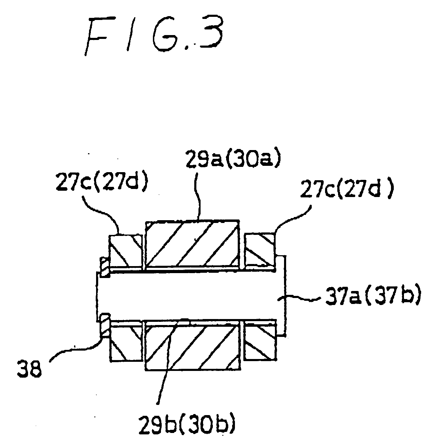

Furthermore, referring to Figure 3, a hinge mechanism is constructed of which only one arm portion of the swash plate and only one arm of rotor plate are slidably connected with one guide pin and one snap pin through the rectangular hole.

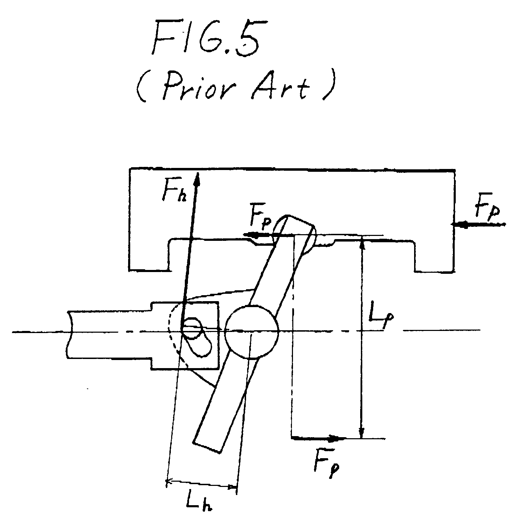

Therefore,referring to Figure 5, the reaction force of piston through gas compression in cylinder acts against the swash plate and is finally received at the hinge coupling mechanism.

When the reaction force from piston by the gas compression in cylinder is Fp, moment Mp is the product of reaction force Fp by length Lp which is distance between the ends of the swash plate.

The axial force of the hinge mechanism is received by moment Mp and against to this moment is Fp , and the distance between the hinge mechanism and the center of swash plate is shown Lp as following equation:

$$Mp = Fp \; Lp$$
$$Fh \cdot Lh = Mp$$
$$Fh = Lp/Lh \cdot Fp$$

In such arrangement, the magnitude of force Fh is large compared with force Fp since the value of length Lh is very small compared with length Lp.

Therefore, the outer peripheral surface of the guide pin and the surface of the rectangular shaped hole of the rotor plate are worn away since the compressor includes only one hinge coupling mechanism and the hinge coupling mechanism receives the large force of the gas compression during operation of the compressor. As a result, an ability to control the compressor becomes deteriorated and also reliability of the adjusting piston stroke.

Accordingly, a first object of the present invention is to provide a variable capacity type swash plate compressor having a durable hinged joint between the swash plate and the rotor plate.

A variable capacity type swash plate compressor according to the present invention comprises a cylinder block having a plurality of cylinder chambers therein;

a drive shaft rotatably supported in said cylinder block;

a swash plate tiltably connected to said drive shaft and adapted to be rotated together with said drive shaft;

pistons slidably received in said cylinder chambers and adapted to be reciprocally moved in said cylinder chambers in accordance with an oscillatory motion of said swash plate;

a support portion disposed coaxially with said drive shaft and supporting a central portion of said swash plate rotatably and tiltably; and

a spool for driving said support portion axially of said drive shaft to move said central portion of said swash plate axially of said drive shaft, characterised by:

said support portion including a first arm portion radially extending therefrom, said swash plate including a second and third arm portions axially extending from the opposite end surfaces thereof, respectively, said drive shaft including a fourth arm portion radially extending therefrom in the opposite direction to said first arm portion, said first and second arm portions being hingedly connected and said third and fourth arm portions being hingedly connected to change the angle of tilt of said swash plate, whereby the strokes of reciprocatory movements of said pistons in said cylinder chambers are changed.

In the accompanying drawings:-

Figure 1 is longitudinal sectional view of swash plate type refrigerant compressor with a variable displacement mechanism in accordance with an embodiment of a minimum slant angle of the swash plate.

Figure 2 is a longitudinal sectional view of the swash plate type refrigerant compressor with the variable displacement mechanism in accordance with an embodiment of a maximum angle of swash plate.

Figure 3 is enlarged cross sectional view taken along line 4-4 of Figure 1.

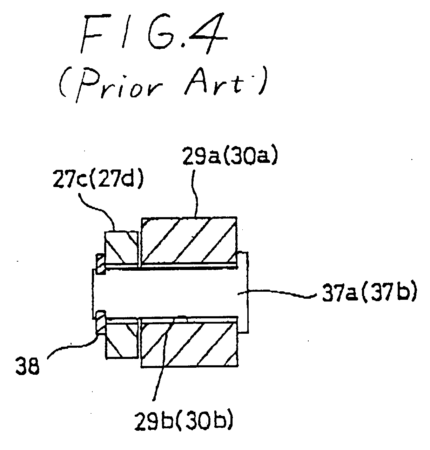

Figure 4 is enlarged cross sectional view similar Figure 3 of a prior art.

Figure 5 is an illustrative view of the drive mechanism showing a hinge coupling mechanism in accordance with a prior art.

Figure 6 is an illustrative view of the drive mechanism showing the hinge coupling mechanism in accordance with Figure 1.

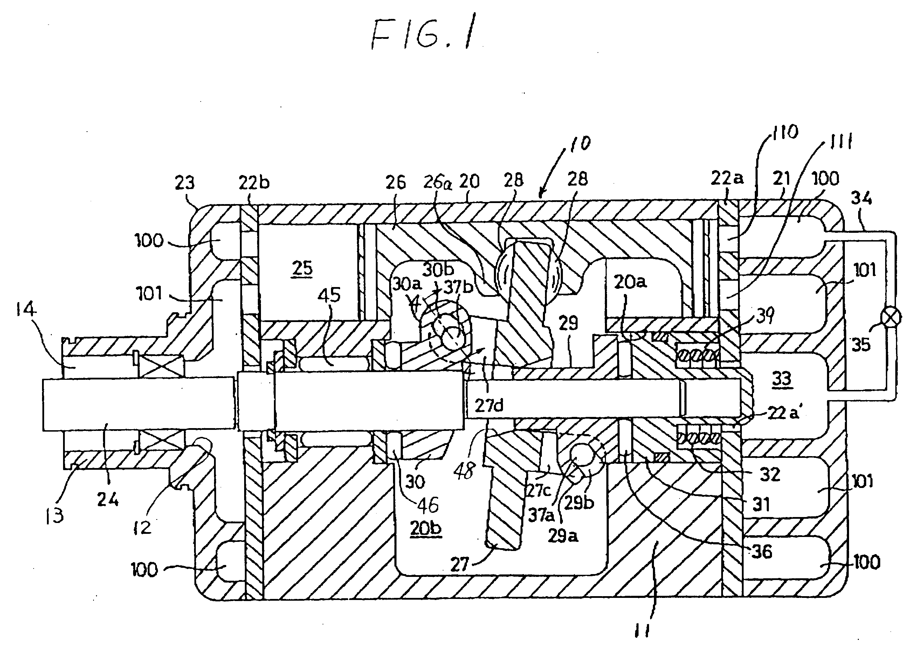

Referring to Figure 1, a refrigerant compressor according to this invention is shown. The compressor includes a closed cylinder housing assembly 10 formed by an annular casing 20 provided with cylinder block 11 at one its sides, a hollow portion such as crank chamber 20b, front end plate 23 and rear end plate21.

Front end plate 23 and valve plate 22b are mounted on the end of opening of annular casing 20 to close the end opening of crank chamber 20b and fixed on casing 20 by a plurality of bolts(not shown). Rear end plate 21 and valve plate 22a are mounted on the other end of casing 20 by a plurality of bolts(not shown) to cover the end portion of cylinder block 11. An opening 12 is formed in front end plate 23 for receiving drive shaft 24. An annular sleeve 13 projects from the front end surface of front end surface of front end plate 23 through bearing 45, which is disposed within cylinder block 11. The inner end of drive shaft 24 is provided with a first rotor plate 30 and drive shaft 24 is fixed in rotor plate with a pin( not shown).

A thrust needle bearing 46 is placed between the inner end surface of front end plate 23 and the adjacent axial end surface of rotor plate 30 to receive the thrust load that acts against rotor plate30 and ensure smooth motion. The outer end of drive shaft 24, which extends outwardly from sleeve 14, is driven by the engine of a vehicle through a conventional pulley arrangement.

The inner end of drive shaft 24 extends into a second rotor plate 29 rotatably and central bore 20a formed in the center of cylinder block 11 and is rotatably supported therein by a bearing such as radial needle bearing 47 within actuator 31. The inner end of drive shaft 24 is rotatably supported in the inside of actuator 31 and is rotatably disposed in central bore 20. Coil spring 32 surrounds the end of actuator 31 and disposed between actuator 31 and valve plate 22a to push actuator 31 toward outside of drive shaft 24. The recoil strength of coil spring 32 is set to opposite to the inner compression of crank chamber 20b.

Chamber 39 of rear side of actuator 31 is communicated with control chamber 33 through hole 22a' of valve plate 22a and the movement volume of actuator 31 is adjustable by the inner gas compression of control chamber 33 which is controlled by pressure control valve 35 of pressure control system communicated with discharge chamber 100. A second rotor plate 29 includes arm portion 29a projecting outwardly from one side surface thereof and forming rectangular hole 29b obliquely to drive shaft 24. Swash plate includes opening 48 through which drive shaft 24 is disposed and first arm portion 27c and second arm portion27d.

First arm portion 27c projects toward first portion 29a of first rotor plate 29 from one side surface thereof. Second arm portion 27d projects toward second arm portion 30a of second rotor plate 30 from one side surface thereof.

In this manner, swash plate 27 is connected with rotor plate 29 and rotor plate 30 through a hinge coupling mechanism for rotation in unison with rotor plate 29 and rotor plate 30.

In this construction, pin 37b is slidably disposed in rectangular hole 30b and in groove 29b, the sliding motion of pin 37a and pin 37b changes the slant angle of the inclined surface of swash plate27.

Cylinder block 20 includes a plurality of annularly arranged cylinders 25 into which piston 26 slides. Each piston 26 comprises a double-headed portion slidably disposed within cylinder 25 and connecting portion 26a.

Semi spherical thrust bearing shoes 28 are disposed between each side surface of connecting portion 26a for sliding along the side surface of swash plate 27. The rotation of drive shaft 24 causes swash plate 27 to rotate between bearing shoes 28 and to move the inclined surface axially to the right and left, thereby reciprocating piston 26 within cylinder 25.

Rear end plate 21 is shaped to define suction chamber 101 and discharge chamber 100. Valve plate 22a, which together with rear end plate 21 is fastened to the end of cylinder block 20 by bolts( not shown ), is provided with a plurality of valve suction ports 111 connected between suction chamber 101 and respective cylinders 25, and a plurality of valve discharge ports 110 connected between discharge chamber 100 and respective cylinder 25. Discharge chamber 100 and control chamber 33 are connected by a pressure control system 34 including passage way and control valve 35.

Referring to Figure 3, first arm portion 27c of swash plate 27 and second portion 27d are respectively disposed symmetrical to the canter of swash plate 27 two by two and inserted with first arm 29a of first rotor plate 29. First arm portion 27c and second arm portion 27d of swash plate are rotatably projected with first arm portion 29a of first rotor plate 29 and second arm portion 30a of second rotor plate 30 through first rectangular hole 29b and second rectangular hole 30b by pin 37a and 37b. Pin 37a and pin 37b are fixed to prevent falling out by snap ring 38.

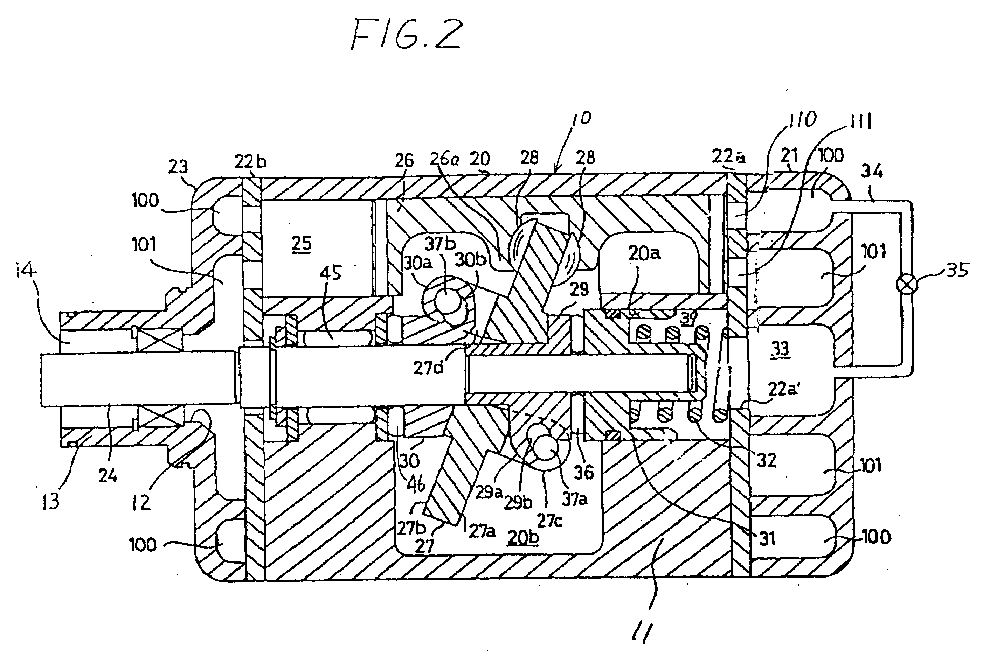

With such an arrangement, swash plate 27 in shifted between a position where the inclination angle is large as shown in Figure and a position where the inclination angle is small as shown in Figure 2, while pin 37a and 37b of swash plate 27 is being slid within rectangular hole 29b and second rectangular hole 30b.

In operation, drive shaft 24 is rotated by the engine of a vehicle through the pulley arrangement, and first rotor plate 29 and second rotor plate 30 are rotated together with drive shaft 24. The rotation of these plate are transferred to swash plate 27 through the hinge coupling mechanism so that with respect to the rotation of these rotor plate the inclined surface of swash plate 27 moves axially to the right and left. Double-headed piston 26 which are operatively connected to swash plate 27 by means of swash plate 27 sliding between bearing shoes 28, therefore reciprocate within cylinder 25. As double headed piston 26 reciprocate, the refrigerant gas which is introduced into suction chamber 101 from the fluid inlet port is taken into each cylinder 25 and compressed. The compressed refrigerant is discharged to discharge chamber 100 from each cylinder 25 through discharge port 111 and therefrom into an external fluid circuit, for example a cooling circuit through the fluid outlet port.

When the refrigerant capacity of a compressor is decreased, the pressure in control chamber 33 is decreased by closing control valve 35, the pressure in control chamber 20b becomes smaller than the integrated pressure of control chamber and the recoil strength of coil spring 32. Thereby, actuator 31 frictionally slides toward valve plate 22a. Thereby, first rotor plate 29 is moved toward actuator 31 by the pressure in crank chamber 20b.

As a result, pin 37a causes the counter clock wise rotation of first arm 27c of awash plate 27 guide by first rectangular hole 29b.

Also, the above action causes the counterclockwise rotation of second arm 27d of swash plate 27 and pin 37b slides downward through groove gain 30b.

As a result, the slant angle of swash plate 27 is minimized related to the vertical plane. This results in the minimum stroke of double-headed piston 26 within cylinder 25 which corresponds to the normal refrigerant capacity of the compressor.

On the other hand, when the refrigerant capacity of a compressor is increased, the pressure in control chamber 33 is increased by opening control valve 35, the integrated force of the pressure in chamber 33 and the recoil of coil spring 32 become to be larger than the pressure in crank chamber 20b, the actuator 31 frictionally slides toward swash plate 27 and first rotor plate 29 is moved toward second rotor plate 30 by actuator 31. As a result, pin 37a causes the clock wise rotation of first arm 27c of swash plate 27 sliding in first rectangular hole 29b. Also, the above action causes the clockwise rotation of second arm 27d of swash 27 and pin 37b slides upward guided by groove 30b.

As a result, the slant angle of swash plate 27 is maximized relatively to the vertical plane. This result in the maximum stroke of double headed piston 26 within cylinder 25 which corresponds to normal refrigerated capacity of the compressor.

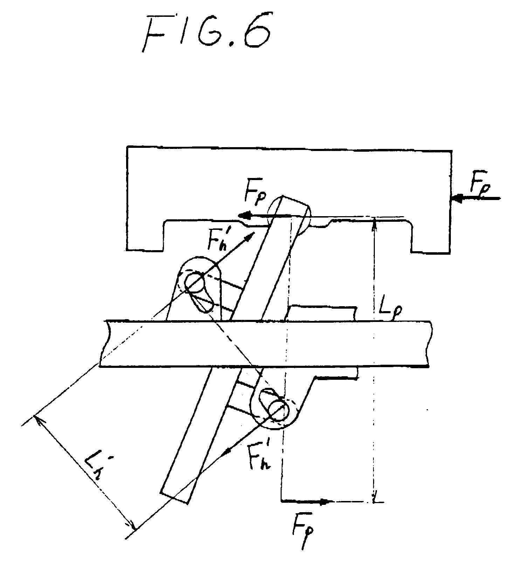

Therefore, referring to Figure 6, the reaction of piston 27 stroke through gas compression in cylinder 25 acts against swash plate 27 and is finally received by the hinge coupling mechanism. The moment caused by the rotation force acting on piston 26 thus acts against the hinge coupling mechanism to cause clockwise rotation as center of swash plate 27.

When the reaction force from piston by gas compression and the moment of swash plate 27 subject by the force of both side piston in casing is respectively $Fp, Mp'$, and the distance between the apex and the end of swash plate is settled $Lp'$, Moment $Mp'$ is the product of force $Fp'$ by distance $Lp'$ as following equation.

$$Mp' = Fp \cdot Lp'$$

Also, when the force of two hinge mechanisms subjected by from swash plate 27 and the distance between the first hinge coupling mechanism and the second hinge coupling mechanism are settled respectively $Fh', Lh'$, and the moment of hinge coupling mechanism is settled $Mh'$,

$$Mh' = Fh' \cdot Lh'$$

Moment $Mp'$ should be balance with moment $Mh'$. As following equations formulate.

$$Fh' \cdot Lh' = Fp \cdot Lp'$$
$$Fh' = Lp'/Lh' \cdot Fp$$

With such arrangement, the magnitude of force $Fh'$ is very small compared with force $Fp$ since the value of distance $Lh'$ is very large compared with $Lp'$.

Furthermore, two hinge mechanism could be more securely supported against the large moment of reaction compression from pistons, since swash plate 27 includes arm portion being two by two up and down, and frictionally supported by thereof.

**Claims**

1. A swash plate type compressor comprising:
   a cylinder block (20) having a plurality of cylinder chambers (25) therein;

a drive shaft (24) rotatably supported in said cylinder block;

a swash plate (27) tiltably connected to said drive shaft and adapted to be rotated together with said drive shaft;

pistons (26) slidably received in said cylinder chambers and adapted to be reciprocally moved in said cylinder chambers in accordance with an oscillatory motion of said swash plate;

a support portion (29) disposed coaxially with said drive shaft and supporting a central portion of said swash plate rotatably and tiltably; and

a spool (31) for driving said support portion axially of said drive shaft to move said central portion of said swash plate axially of said drive shaft, characterised by

said support portion including a first arm portion (29a) radially extending therefrom, said swash plate including a second and third arm portions (27c, 27d) axially extending from the opposite end surfaces thereof, respectively, said drive shaft including a fourth arm portion (30a) radially extending therefrom in the opposite direction to said first arm portion, said first and second arm portions being hingedly connected and said third and fourth arm portions being hingedly connected to change the angle of tilt of said swash plate, whereby the strokes of reciprocatory movements of said pistons in said cylinder chambers are changed.

## Patentansprüche

1. Schiefscheibenkompressor mit:
einem Zylinderblock (20) mit einer Mehrzahl von Zylinderkammern (25) darin;
einer Antriebswelle (24), die drehbar in dem Zylinderblock gelagert ist;
einer Schiefscheibe (27), die kippbar der Antriebswelle verbunden ist und zum Drehen zusammen mit der Antriebswelle ausgelegt ist;
Kolben (26), die gleitend in den Zylinderkammern aufgenommen sind und so ausgelegt sind, daß sie hin und her in den Zylinderkammern gemäß einer schwingenden Bewegung der Schiefscheibe bewegt werden;
einem Tragabschnitt (29), der koaxial zu der Antriebswelle vorgesehen ist und einen Mittelabschnitt der Schiefscheibe drehbar und kippbar trägt; und
einer Spule (31) zum Antreiben des Tragabschnittes axial zu der Antriebswelle zum Bewegen des Mittelabschnittes der Schiefscheibe axial zu der Antriebswelle;
dadurch gekennzeichnet, daß
der Tragabschnitt einen ersten Armabschnitt (29a) aufweist, der sich radial davon erstreckt, die Schiefscheibe einen zweiten und einen dritten Armabschnitt in (27c, 27d) aufweist, die sich von ihren entsprechenden gegenüberliegenden Endabschnitten erstrecken, die Antriebswelle einen vierten Armabschnitt (30a) aufweist, der sich davon in die entgegengesetzte Richtung zu dem ersten Armabschnitt erstreckt, wobei der erste und zweite Armabschnitt scharniermäßig verbunden sind und der dritte und vierte Armabschnitt scharniermäßig verbunden sind zum Ändern des Neigungswinkels der Schiefscheibe, wodurch die Hübe der Hin- und Herbewegungen der Kolben in den Zylinderkammern geändert werden.

## Revendications

1. Compresseur de type à plateau en biais, comprenant :
   - un bloc de cylindres (20) comportant une pluralité de chambres de cylindre (25) dans celui-ci ;
   - un arbre d'entraînement (24) monté en rotation dans le bloc de cylindres ;
   - un plateau en biais (27) relié de façon basculable à l'arbre d'entraînement et destiné à être entraîné en rotation solidairement de cet arbre d'entraînement ;
   - des pistons (26) montés en glissement dans les chambres de cylindres et destinés à être entraînés dans un mouvement de va-et-vient à l'intérieur des chambres de cylindres, suivant un mouvement oscillatoire du plateau en biais ;
   - une partie de support (29) disposée coaxialement avec l'arbre d'entraînement et supportant en rotation et en basculement une partie centrale du plateau en biais ; et
   - un actionneur (31) destiné à entraîner la partie de support dans le sens axial de l'arbre d'entraînement, pour entraîner la partie centrale du plateau en biais dans le sens axial de l'arbre d'entraînement, caractérisé en ce que la partie de support comprend une première partie de bras (29a) partant radialement de celle-ci, en ce que le plateau en biais comprend une seconde et une troisième partie de bras (27c, 27d) partant axialement des surfaces d'extrémité opposées respectives de celui-ci, en ce que l'arbre d'entraînement comprend une quatrième partie de bras (30a) partant radialement de celui-ci dans la direction opposée à celle de la première partie de bras, en ce que la première et le seconde partie de bras sont reliées de manière articulée, et en ce que la troisième et la quatrième partie de bras sont reliées de manière articulée, afin de modifier l'angle d'inclinaison du plateau en biais, ce qui permet ainsi de modifier les courses des mouvements de va-et-vient des pistons dans les chambres de cylindres.

# FIG.1

EP 0 550 228 B1

FIG.2

# F I G. 3

# FIG.4
## (Prior Art)

27c(27d)

29a(30a)

37a(37b)

38

29b(30b)

FIG.5
( Prior Art )

# FIG.6